(19) Europäisches Patentamt
European Patent Office
Office européen des brevets

(11) Veröffentlichungsnummer: **0 119 491**
**A1**

(12) # EUROPÄISCHE PATENTANMELDUNG

(21) Anmeldenummer: **84101684.3**

(22) Anmeldetag: **17.02.84**

(51) Int. Cl.[3]: **C 09 J 3/14,** F 16 L 58/10

(30) Priorität: **18.02.83 DE 3305724**

(43) Veröffentlichungstag der Anmeldung: **26.09.84**
**Patentblatt 84/39**

(84) Benannte Vertragsstaaten: **AT CH FR GB IT LI NL**

(71) Anmelder: **Gebrüder Kömmerling Kunststoffwerke GmbH, Zweibrückerstrasse 200, D-6780 Pirmasens (DE)**

(72) Erfinder: **Michel, Manfred, Dr., Buchsweiler Strasse 75, D-6780 Pirmasens (DE)**
Erfinder: **Themm, Jürgen, Herschberger Strasse 20, D-6784 Thaleischweiler (DE)**
Erfinder: **Baur, Kurt, Mohrbrunner Strasse 3, D-6780 Pirmasens 17 (Winzeln) (DE)**

(74) Vertreter: **Sandmair, Kurt, Dr. et al, Dr. Berg, Dipl.-Ing. Stapf Dipl.-Ing. Schwabe, Dr. Dr. Sandmair Mauerkircherstrasse 45, D-8000 München 80 (DE)**

(54) **Klebmasse und ihre Verwendung.**

(57) Die Erfindung betrifft eine Klebmasse aus Styrol enthaltenden Blockpolymerisaten und handelsüblichen Naturharzen und/oder synthetischen Harzen, die gegebenenfalls noch aromatische und/oder aliphatische Öle und übliche Zusätze enthalten kann, sowie die Verwendung dieser Klebmasse als Bindemittel zwischen gegebenenfalls grundierten Stahl- und Gussrohren und Kunststoffummantelungen.

EP 0 119 491 A1

liche Beurteilung von Kunststoffen und anderen nicht-metallischen Werkstoffen im Rahmen des Lebensmittel- und Bedarfsgegenstände-Gesetzes für den Trinkwasserbereich) sollen erfüllt sein hinsichtlich:

(a) der äußeren Beschaffenheit (kein Nachweis von Trübung, Färbung, Neigung zur Schaumbildung und keine Überschreitung des Geruchsschwellenwertes gemäß 2.2.2.2 KTW);

(b) des organisch gebundenen Kohlenstoffs (gemäß 2.3 KTW darf der Wert von 2,5 $mg/m^2$ x Tag nicht überschritten werden);

(c) des Wertes der Chlorzehrung (gemäß 2.4 KTW darf ein Wert von 2,0 $mg/m^2$ x Tag nicht überschritten werden);

(d) der Keimzahl des Prüfwassers (die gemäß 1.2.5.4 KTW nicht beeinflußt werden darf (siehe DVGW-Arbeitsblatt W 270)).

(5) Von den Rohrherstellern wird heute außerdem verlangt, daß derartige Beschichtungen auf kalte bzw. kaum vorgewärmte Rohre aufgebracht werden müssen. Die Gründe dafür sind Wirtschaftlichkeit und wärmeempfindliche Innenauskleidungen.

(6) Die Verseifungszahl soll möglichst niedrig sein (gemäß DIN 30 672: 10 mg KOH/g).

Die unter (4) aufgeführten Forderungen werden dann gestellt, wenn Trinkwasser (z.B. bei angebohrten Abzweigungen oder im Muffenbereich) mit den Ummantelungsschichten in Berührung kommt.

Alle bisher bekannten Ummantelungs-Verfahren sowie die dafür eingesetzten Werkstoffe erfüllen jedoch immer nur einen Teil der vorstehend aufgeführten sechs Forderungen. So besitzt z.B. ein Ummantelungs-System zwar einen ausreichenden Schälwiderstand gemäß (1) und eine

Die Erfindung betrifft eine Klebmasse auf Harz-Basis und ihre Verwendung als Bindemittel für Kunststoffummantelungen auf Stahl- und Gußrohren.

Stahl- und Gußrohre korrodieren im Boden und müssen daher vor der Verlegung entsprechend geschützt werden. Bevorzugterweise werden die Rohre vor ihrer Verlegung mit einer oder mit mehreren Kunststoff-Schichten ummantelt, die mittels verschiedener Verfahren aufgebracht werden können. So kann man z.B. die Rohre zunächst mit einer Schicht aus Äthylen-Copolymerisaten versehen, die auf das ca. 200° C erwärmte Rohr aufextrudiert, in Form von Folien aufgewikkelt oder gesintert wird und anschließend Polyäthylen aufextrudieren. Bei anderen Verfahren wird ein harzmodifiziertes Äthylen-Copolymerisat aus der Schmelze auf das kalte Rohr aufgebracht, bevor die Polyäthylen-Extrusion durchgeführt wird. In letzter Zeit wird manchmal auch vor dem Aufbringen des Äthylen-Copolymerisats ein die Haftung vermittelnder und zusätzlich noch korrosionsinhibierender Primer (z.B. auf der Basis von Epoxidharz) auf die Rohroberfläche aufgetragen.

Die Forderungen, die an derartige Rohrummantelungen gestellt werden, sind unter anderem folgende:

(1) Der Schälwiderstand soll gemäß DIN 30 670 mindestens 175 N/5 cm bzw. gemäß DIN 30 674 (für Gußrohre) mindestens 100 N/5 cm betragen.
(2) Die Unterwanderungstiefe gemäß dem "Cathodic Disbonding-Test" nach ASTM G 8.79 soll kleiner als 10 mm sein.
(3) Die Wärmefestigkeit soll möglichst hoch liegen.
(4) Die Anforderungen der "KTW-Empfehlungen" (Gesundheitgeringe Unterwanderungstiefe gemäß (2), hat aber eine Verseifungszahl (gemäß (6)) von ca. 100. Ein anderes System entspricht wiederum zwar den Forderungen der KTW-Empfehlungen gemäß (4) und hat eine Verseifungszahl von niedriger als 10, besitzt aber keine ausreichende Wärmefestigkeit, usw..

Die Aufgabe der Erfindung bestand daher darin, eine Klebmasse zu schaffen, welche alle Forderungen (1) bis (5), und, falls die Rohre der DIN 30 672 entsprechen müssen, zusätzlich auch die Forderung (6) praxisgerecht erfüllt.

Diese Aufgabe wurde nun durch eine Klebmasse gelöst, die

(a) 10 bis 60 Gew.% eines Blockpolymerisats mit Styrol-Butadien-Styrol-Struktur oder

(b) 10 bis 60 Gew.% eines Blockpolymerisats mit Styrol-Isopren-Styrol-Struktur oder

(c) 10 bis 60 Gew.% eines Gemisches von (a) und (b) in beliebigem Verhältnis oder

(d) 10 bis 60 Gew.% eines Blockpolymerisats mit Styrol-Äthylen-Butylen-Styrol-Struktur und

(e) 40 bis 90 Gew.% handelsüblicher Harze, nämlich Naturharze wie Kolophonium- und Terpenharze, die auch verestert sein können, Terpen-Phenol-Harze, synthetische Harze, wie aliphatische und aromatische Kohlenwasserstoff-Harze, sowie Gemische derselben und gegebenenfalls

(f) aromatische und/oder aliphatische Öle bis maximal 30 Gew.%, bezogen auf die gesamte Klebmasse, Alterungsschutzmittel und Füllstoffe

enthält.

Das in der erfindungsgemäßen Klebmasse enthaltene Blockpolymerisat mit Styrol-Butadien-Styrol-Struktur ist ein Styrol-Butadien-Styrol-Blockpolymerisat mit einem Gehalt von etwa 28 % Styrol. Sehr geeignet ist beispielsweise

das unter der Bezeichnung "Cariflex 1102" (Shell) auf dem Markt befindliche Produkt.

Als Blockpolymerisat mit Styrol-Isopren-Styrol-Struktur können in der erfindungsgemäßen Klebmasse Styrol-Isopren-Styrol-Blockpolymerisate mit etwa 14 % Styrol-Gehalt, wie beispielsweise das unter dem Handelsnamen "Cariflex 1107" (Shell) erhältliche Produkt eingesetzt werden.

Das Blockpolymerisat mit Styrol-Äthylen-Butylen-Styrol-Struktur, welches in der erfindungsgemäßen Kelbmasse eingesetzt werden kann, ist ein Styrol-Äthylen-Butylen-Styrol-Blockpolymerisat mit einem Gehalt von etwa 29 % Styrol, wie beispielsweise das im Handel unter der Bezeichnung "Kraton G 1652" erhältliche Produkt.

Die ferner noch anwesenden synthetischen Harze werden z.B. bei der Erdöl-Verarbeitung im Steam-Cracking-Prozeß gewonnen. Dabei werden Gasöle in Gegenwart von Wasserdampf bei niedrigem Druck und hoher Temperatur in niedrigmolekulare, ungesättige Kohlenwasserstoffe mit Olefin-Charakter gespalten. Bestimmte Fraktionen hiervon ($C_5$) werden bei hoher Temperatur, normalem Druck und in Gegenwart von Friedel-Crafts-Katalysatoren zu Harzen der folgenden wiederkehrenden Struktureinheiten polymerisiert:

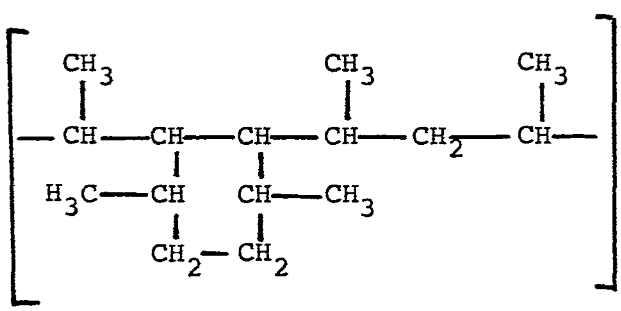

die im allgemeinen ein Molekulargewicht von 400 bis 2000 aufweisen; für die Herstellung niedrigviskoser Massen sind auch Molekulargewichte von 200 bis 400 zweckmäßig.

Diese Harze haben eine Säurezahl von $<1$ mg KOH/g.

Die gegebenenfalls in der erfindungsgemäßen Klebmasse anwesenden Öle können z.B. Paraffinöle sein.

Wenn diese Klebmasse auch die Forderung gemäß (6) erfüllen soll, müssen die im Anspruch 1 unter (e) aufgeführten Harze eine Verseifungszahl aufweisen, die entsprechend dem Anteil dieser Harze in der Gesamtformulierung eine Verseifungszahl von maximal 10 liefert.

Die erfindungsgemäße Klebmasse kann sowohl auf heisse als auch auf kalte Rohre nach üblichen Verfahren in geschmolzenem Zustand aufgebracht werden. Für den Fall, daß ungewöhnlich niedrige Werte (niedriger als 5 mm) nach dem Cathodic-Disbonding-Test gefordert werden, kann die Rohroberfläche vor dem Aufbringen der Klebmasse noch mit einem Primer (z.B. auf der Basis von Polyurethanen, Epoxiden oder ähnlichen) in an sich bekannter Weise grundiert werden.

## Beispiel 1

Auf die kalte mit einem Primer grundierte Rohroberfläche wird eine Mischung aus

15 Gew.% Styrol-Butadien-Styrol-Blockpolymerisat (28 % Styrol-Gehalt; Molekulargewicht ca. 80 000; Schmelzindex (190/5): 6)

15 Gew.% Styrol-Isopren-Styrol-Blockpolymerisat (14 % Styrol-Gehalt; Molekulargewicht ca. 70 000; Schmelzindex (190/5): 9)

70 Gew.% eines handelsüblichen aliphatisch-aromatischen Kohlenwasserstoff-Harzes (Erweichungspunkt: $100^{\circ}$ C; Säurezahl: $<1$)

im Extrusionsverfahren aufgebracht und anschließend die Polyäthylenschicht ebenfalls aufextrudiert.

Die auf diese Weise hergestellte Klebschicht besitzt einen Schälwiderstand (gemäß DIN 30 670) von 280 N/5 cm, eine Unterwanderungstiefe (Cathodic Disbonding-Test gemäß ASTM G 8.79) von ca. 5 mm, einen Schmelzpunkt von über 100° C; sie entspricht den Anforderungen der KTW-Empfehlungen und hat eine Verseifungszahl von 2,3 mg KOH/g.

B e i s p i e l 2

Auf eine schwach (niedriger als 50° C) vorgewärmte Rohroberfläche wird eine Mischung aus

30 Gew.% Styrol-Isopren-Styrol-Blockpolymerisat
35 Gew.% aliphatisches Kohlenwasserstoffharz
30 Gew.% aromatisches Kohlenwasserstoffharz
5 Gew.% Paraffinöl

aufgebracht und anschließend die Polyäthylenschicht aufextrudiert.

Dieser Klebstoff besitzt einen Schälwiderstand nach DIN 30 670 bzw. 30 674 von ca. 250 N/5 cm. Die Verseifungszahl ist 2,8 mg KOH/g. Der Schmelzpunkt beträgt 95° C. Die Anforderungen der KTW werden erfüllt und bei Verwendung eines Vorstrichs auf Basis eines Präpolymeren aus Polyesterol/Isocyanat wird eine Unterwanderungstiefe nach ASTM G 8.79 von 5 mm erreicht.

BERG · STAPF · SCHWABE · SANDMAIR
PATENTANWÄLTE
MAUERKIRCHERSTRASSE 45 · 8000 MÜNCHEN 80

0119491



Anwaltsakte Nr. 50 406

Gebrüder Kömmerling Kunststoffwerke GmbH

6780 Pirmasens

Klebmasse und ihre Verwendung

Patentansprüche:

1. Klebmasse, dadurch gekennzeichnet, daß sie
   (a) 10 bis 60 Gew.% eines Blockpolymerisats mit Styrol-Butadien-Styrol-Struktur oder
   (b) 10 bis 60 Gew.% eines Blockpolymerisats mit Styrol-Isopren-Styrol-Struktur oder
   (c) 10 bis 60 Gew.% eines Gemisches von (a) und (b) in beliebigem Verhältnis oder
   (d) 10 bis 60 Gew.% eines Blockpolymerisats mit Styrol-Äthylen-Butylen-Styrol-Struktur und
   (e) 40 bis 90 Gew.% handelsüblicher Harze, nämlich Naturharze wie Kolophonium- und Terpenharze, die auch verestert sein können, Terpen-Phenol-Harze, synthetische Harze, wie aliphatische und aromatische Kohlenwasserstoff-Harze, sowie Gemische derselben und gegebenenfalls
   (f) aromatische und/oder aliphatische Öle bis maximal

30 Gew.%, bezogen auf die gesamte Klebmasse, Alterungsschutzmittel und Füllstoffe
enthält.

2. Klebmasse nach Anspruch 1, dadurch gekennzeichnet, daß die unter (e) aufgeführten Harze eine Verseifungszahl aufweisen, die entsprechend dem Anteil dieser Harze in der Gesamtformulierung eine Verseifungszahl von maximal 10 liefert.

3. Verwendung der Klebmasse nach einem der Ansprüche 1 und 2 als Bindemittel zwischen gegebenenfalls grundierten Stahl- und Gußrohren und Kunststoffummantelungen.

Europäisches Patentamt

# EUROPÄISCHER RECHERCHENBERICHT

0119491

Nummer der Anmeldung

EP 84 10 1684

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | FR-A-1 541 288 (DUNLOP) * Seite 3, Zusammenfassung; Seite 1, rechte Spalte, Zeile 22 - Ende * | 1,2 | C 09 J 3/14<br>F 16 L 58/10 |
| X | DE-A-2 548 182 (KORES HOLDING ZUG) * Seite 1, Ansprüche 1-5 * | 1,2 | |
| X | US-A-3 954 692 (RAYMOND E. DOWNEY) * Spalten 9,10; Anspruch 1 * | 1,2 | |
| X | US-A-4 097 434 (GEORGE T. COCKER Jr.) * Spalte 2, Zeilen 1-20 * | 1,2 | |

RECHERCHIERTE SACHGEBIETE (Int. Cl. 3)

C 09 J
C 09 D
C 08 L

Der vorliegende Recherchenbericht wurde für alle Patentansprüche erstellt.

| Recherchenort | Abschlußdatum der Recherche | Prüfer |
|---|---|---|
| DEN HAAG | 28-05-1984 | GIRARD Y.A. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82